# EUROPEAN PATENT SPECIFICATION

(11) **EP 3 053 788 B1**
(45) Date of publication and mention of the grant of the patent: **26.12.2018**
(21) Application number: 14848518.8
(22) Date of filing: 24.04.2014
(51) Int. Cl.: B60R 25/10, B62J 1/12, E05B 83/16, B62H 5/00

(54) **EMERGENCY UNLOCKING DEVICE FOR VEHICLE**
NOTENTRIEGELUNGSVORRICHTUNG VORRICHTUNG FÜR EIN FAHRZEUG
DISPOSITIF DE DÉVERROUILLAGE D'URGENCE POUR VÉHICULE

(30) Priority: 30.09.2013 JP 2013205566
(43) Date of publication of application: 10.08.2016
(73) Proprietor: HONDA MOTOR CO., LTD., Tokyo 107-8556 (JP); HONDA LOCK MFG. CO., LTD., Sadowara-cho Miyazaki-City, Miyazaki 880-0293 (JP)
(72) Inventor: KINOSHITA, Nobuaki, Wako-shi Saitama 351-0193 (JP); TAKAISHI, Yusuke, Wako-shi Saitama 351-0193 (JP); HIDAKA, Masatake, Miyazaki-City Miyazaki 880-0293 (JP); WAKAI, Hayato, Miyazaki-City Miyazaki 880-0293 (JP)
(74) Representative: Kudlek, Franz Thomas
(86) International application number: PCT/JP2014/061623
(87) International publication number: WO 2015/045465

(56) References cited:
- EP-A2- 1 524 177
- DE-A1- 4 409 559
- JP-A- 2007 176 239
- JP-A- 2007 276 635
- JP-A- 2008 037 182
- US-A1- 2007 285 272
- US-A1- 2008 127 693

## Description

### Technical Field

The present invention relates to an emergency unlocking device for a vehicle, and particularly, to an emergency unlocking device for a vehicle including an ignition switch that is enabled to be operated according to wireless electronic authentication with an electronic key.

### Background Art

Conventionally, an electronic key system that performs electronic authentication to enable an ignition switch of a vehicle to be operated, with a wireless communication capable electronic key, has been known. With such a system, as an emergency measure in such a case where the electronic key is lost or the battery of the electronic key has run out, an emergency unlocking device that enables the ignition switch to be operated without using the electronic key has been proposed.

Patent Document 1 discloses an emergency unlocking device that operates a key cylinder provided in a vehicle by using a cylinder key for emergency unlocking separated and independent from the electronic key, and accordingly, forcibly unlocks a lock mechanism that restricts a turning operation of the ignition switch.

### Citation List

### Patent Literature

Patent Document 1: JP 2007-276635 A, also published as US2007/0285272, and considered to be the closest prior art.

### Summary of Invention

### Technical Problem

However, the technology described in Patent Document 1 has a problem in which, due to the configuration in which the key cylinder for emergency unlocking is at a position away from the ignition switch, and by a cable connected between these, a lock mechanism of an ignition knob is unlocked, the number of components of the emergency unlocking device is large, and the space occupied by the emergency unlocking device is also large.

An object of the present invention is to solve the problem in the conventional technology described above, and to provide an emergency unlocking device for a vehicle that can be structurally simplified and entirely downsized.

### Solution to Problem

To solve the afore-mentioned problem, the present invention has a first feature in that an emergency unlocking device for a vehicle comprising: a smart module unit (50) including an operation knob (51) of an ignition switch unit (54) that turns ON/OFF a power supply of a vehicle, a lid open mechanism (90) to open lids (16, 25) provided in the vehicle, and a lid open knob lock mechanism (70) to lock operation of the lid open knob (60) that actuates the lid open mechanism (90) according to a position of the operation knob (51), and configured so that a turning operation of the operation knob (51) is permitted according to electronic authentication between a vehicle-side control unit (101) and an electronic key (100), wherein an emergency unlock mechanism (201) that can directly operate the lid open mechanism (90) by using an emergency key (200) separated and independent from the electronic key (100) in a state where operation of the lid open knob (60) is locked is provided

The present invention has a second feature in that the emergency unlock mechanism (201) is formed integrally with the ignition switch unit (54).

The present invention has a third feature in that the emergency unlock mechanism (201) is an operator that is turned by the emergency key (200) being a magnet key, and transmits the turning operation to other components.

The present invention has a fourth feature in that the emergency unlock mechanism (201) is formed to pull cables (27, 28) to open the lids (16, 25) by turning the lid open mechanism (90) along with the turning operation of the emergency unlock mechanism.

The present invention 5 has a fifth feature in that the operation knob (51), the lid open knob (60), and the emergency unlock mechanism (201) are disposed side by side.

The present invention has a sixth feature in that wherein an operation surface of the lid open knob (60) and an operation surface of the emergency unlock mechanism (201) are disposed orthogonal to each other.

### Advantageous Effects of Invention

According to the first feature, an emergency unlock mechanism that can directly operate a lid open mechanism by using an emergency key separated and independent from an electronic key in a state where operation of a lid open knob is locked is provided. Therefore, even in a case where an operation knob of an ignition switch unit cannot turn due to the impossibility of electronic authentication with a vehicle side caused by loss of the electronic key, running out of a battery of the electronic key, or running out of an on-vehicle battery, etc., a lid of the vehicle can be opened by using the emergency key. Accordingly, as compared with the configuration in which an ignition knob with an incorporated solenoid is unlocked, an emergency unlocking device can be realized with a simple configuration.

According to the second feature, an emergency unlock mechanism is formed integrally with an ignition switch unit. Therefore, as compared with the configuration in which the emergency unlock mechanism is disposed at a location away from the ignition switch unit, a cable to join these, etc., does not need to be newly installed, the emergency unlock mechanism can be realized with a simple structure, and the number of components and the space occupied by the emergency unlock mechanism can be reduced, and a smart module unit can be downsized.

According to the third feature, an emergency unlock mechanism is an operator that is turned by an emergency key being a magnet key, and transmits the turning operation to other components. Therefore, the structure of the emergency unlock mechanism can be simplified and downsized, and the operation surface of a smart module unit can be formed compactly.

According to the fourth feature, an emergency unlock mechanism is formed to pull cables to open lids by turning a lid open mechanism along with the turning operation of the emergency unlock mechanism. Therefore, by a simple mechanism that converts turning of a key cylinder of an emergency key into reciprocating movement to pull a cable, the emergency unlock mechanism can be configured.

According to the fifth feature, an operation knob, a lid open knob, and an emergency unlock mechanism are disposed side by side. Therefore, these three operation portions are disposed in a concentrated manner, and therefore, a smart lock module can be further downsized.

According to the sixth feature, an operation surface of a lid open knob and an operation surface of an emergency unlock mechanism are disposed orthogonal to each other. Therefore, by disposing of the operation surface of the emergency unlock mechanism orthogonal to the operation surface of the lid open knob directed toward a rider side, the emergency unlock mechanism can be made hard to see from the outside. In a case where the lid open knob is a seesaw knob and the operation surface thereof is directed toward a rider, a turning shaft of the emergency unlock mechanism and a swing shaft of the lid open knob can be disposed coaxial with each other, and accordingly, a smart lock module can be further downsized.

### Brief Description of Drawings

Fig. 1 is a side view of a motorcycle to which an emergency unlocking device for a vehicle according to an embodiment of the present invention is applied.
Fig. 2 is a perspective view of a smart lock module.
Fig. 3 is a front view of a smart lock module in a lock position.
Fig. 4 is a rear side perspective view of a smart lock module.
Fig. 5 is a right side view of a smart lock module.
Fig 6 is a functional block diagram showing the entire configuration of an emergency unlocking device.
Fig 7 is a perspective view showing the configuration of an emergency unlock mechanism.
Fig 8 is a top view of showing the configuration of the smart lock module.
Fig. 9 is a front view of a smart lock module in a unlock position.

### Description of Embodiments

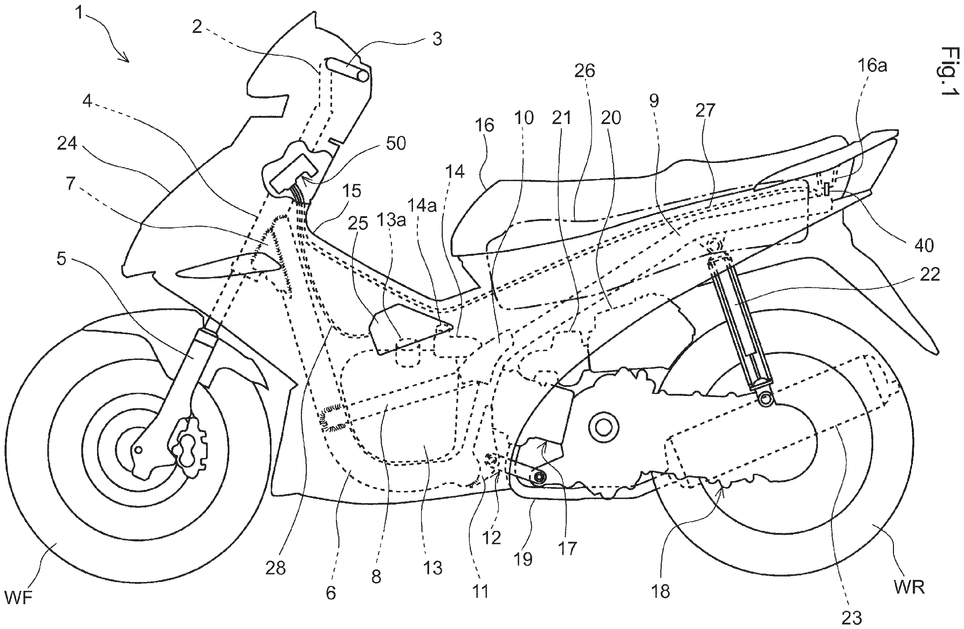

Hereinafter, a preferred embodiment of the present invention is described in detail with reference to the drawings. Fig. 1 is a side view of a motorcycle 1 to which an emergency unlocking device for a vehicle according to the present invention is applied. The motorcycle 1 is a scooter type vehicle including a unit swing type power unit in which a continuously variable transmission is housed. To a pair of left and right main frames 6, a head pipe 4 and a gusset 7 are fixed, and on the head pipe 4, a pair of left and right front forks 5 that axially support a front wheel WF rotatably are supported in a steerable manner.

The front forks 5 can be steered with a handle bar 2 joined to an upper portion of a stem shaft that is axially supported rotatably by the head pipe 4. To both end portions of the handle bar 2, handle grips 3 that a rider grips are attached.

The main frames 6 are joined to a seat frame 9 that is curved at the lower side of the vehicle body and extends to the rear portion of the vehicle body. To the gusset 11 that is coupled to the rear end lower portions of the main frames 6, a link plate 12 that supports a power unit 18 is joined. The main frames 6 and the seat frame 9 are connected by a pair of left and right sub frames 8 as well via the gusset 10. A fuel tank 13 having a fill opening 13a is disposed so as to be sandwiched between the sub frames 8, and near the fuel tank 13, a cooling water reservoir tank 14 having a water inlet 14a is disposed.

On the link plate 12, the power unit 18 that includes an engine 17, a throttle body 21, and an air cleaner box 20, and drives a rear wheel WR is supported. The power unit 18 is hung by a rear cushion 22 attached to the seat frame 9 and axially supported swingably with respect to the vehicle body. The other end side of an exhaust pipe 19 that is connected to the cylinder head of the engine 17 is joined to a muffler 23 disposed on the rear side of the vehicle body.

Above the seat frame 9, a seat 16 on which a rider sits is disposed. This seat 16 is configured so as to open around a turning shaft provided on the front end portion to enable access to a storage box 26 disposed below the seat. To the back surface of the rear end side of the seat 16, a substantially U-shaped lock member 16a that engages with a seat catch 40 supported so as to be fixed to the seat frame 9 is attached. The lock member 16a and the seat catch 40 are configured to keep the seat 16 closed unless a rider or the like performs an unlocking operation.

On the other hand, to a cover panel 15 that covers the head pipe 4 from the rear side of the vehicle body with respect to the front cover 24 that covers the front side of the vehicle body, a fuel lid 25 that accesses the fill opening 13a of the fuel tank 13 and the water inlet 14a of the reservoir tank 14 is attached. This fuel lid 25 is also configured so as to be openable and closable around a turning shaft provided on the front side of the vehicle body, and be kept in a locked state unless a rider or the like performs an unlocking operation.

On the right side of the head pipe 4 disposed at the center in the vehicle width direction, a smart lock module 50 including an ignition switch of the vehicle is disposed. To the smart lock module 50, cables 27 and 28 through which slidable wires are inserted are joined. The other end sides of the cables 27 and 28 are joined to the seat catch 40 and a catch mechanism of the fuel lid 25, respectively, and by operating the smart lock module 50, the seat 16 and the fuel lid 25 can be opened.

The objects to be unlocked by cable driving of the smart lock module 50 are not limited to the fuel lid 25 and the seat 16, and may be, for example, a lid of a small article case, etc., provided near the smart lock module 50. Hereinafter, description is given by referring to the seat 16 that serves as a lid of the storage box 26 as a storage lid.

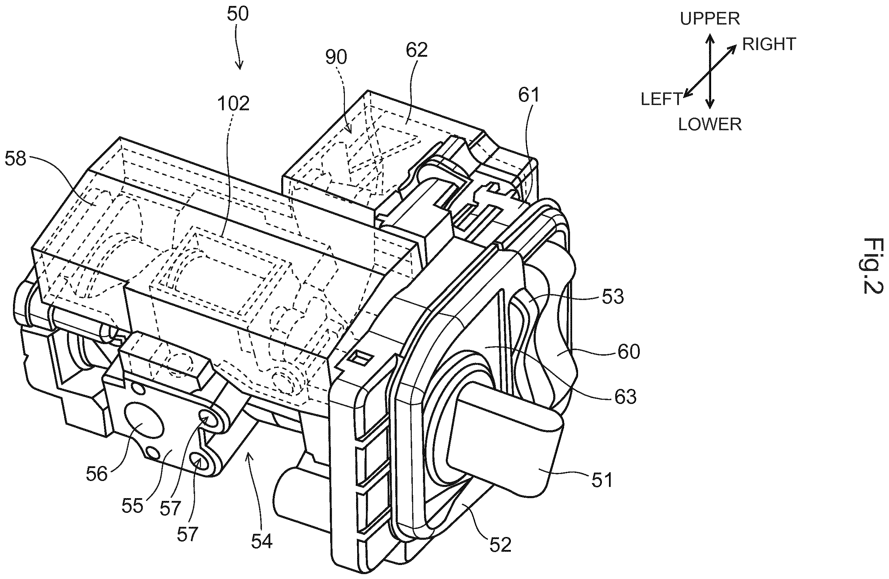

Fig. 2 is a perspective view of the smart lock module 50. The smart lock module 50 is a composite switch unit including an ignition knob (hereinafter, referred to as IG knob) 51 that turns an ignition switch (power supply switch) of the vehicle, a seesaw-type lid open knob 60 that unlocks the fuel lid 25 and the storage lid 16.

Around the IG knob 51, a decorative plate 63 configured so as to have a backlight consisting of an LED, etc., to make visible an indication of a turning position, etc., of the IG knob 51 even at night, etc., and a first case 52 that supports an ignition switch unit (hereinafter, referred to as IG switch unit) 54 joined to the rear side of the IG knob 51 and the decorative plate 63, are disposed. On the vehicle body right side of the first case 52, a second case 61 that supports the lid open knob 61 swingably and supports the lid open mechanism 90 to pull the cables 27 and 28 is provided. Each of the first case 52 and the second case 61 can be made of hard resin, etc.

At a position close to the lid open knob 60 on the first case 52, a curved projection 53 formed in accordance with the shape of the lid open knob 60 is provided to prevent an unintentional touch on the lid open knob 60 at the time of an operation of the IG knob 51. The upper portion of the IG switch unit 54 is covered by the first protective cover 58, and the surrounding of the lid open mechanism 90 is covered by a second protective cover 62. The first protective cover 58 and the second protective cover 62 can be made of hard resin, etc.

When the smart lock module 50 is attached to the vehicle body, only portions of the first case 52 and the second case 61 are exposed to the rider side from an opening provided in a cover panel 15 (refer to Fig. 1) of the vehicle to make operable the IG knob 51 and the lid open knob 60. On the other hand, the IG switch unit 54 and the lid open mechanism 90 are concealed by the cover panel 15 and are not visible from the outside.

The turning position of the IG knob 51 changes among three positions of an "OFF position, an "ON position," and a "LOCK position." The IG switch unit 54 has functions to switch ON/OFF of the power supply of the vehicle according to a turning operation of the IG knob 51, and makes a lock pin 56 project from a handle lock portion 55 when the IG knob 51 is turned to the LOCK position. The lock pin 56 that has projected is engaged in an engagement hole of the stem shaft from a through hole provided in the head pipe 4, and accordingly, a handle lock state where the handle bar 2 is restricted from turning is established. In the handle lock portion 55, a screw hole 57 for fixation of the smart lock module 50 to the side portion of the head pipe 4 is formed. The outer frame of the IG switch unit 54 is made of metal such as aluminum.

The IG switch unit 54 is provided with an ignition knob lock mechanism (hereinafter, referred to as IG knob lock mechanism) 102 using a solenoid. The IG knob lock mechanism 102 is configured to disable turning of the IG knob 51 by engagement with a lock pin biased by a biasing member such as a spring, and disengage the lock pin and allows turning of the IG knob 51 only when the solenoid is energized by power of the on-vehicle battery. Therefore, the IG knob lock mechanism 102 cannot be unlocked not only in the case where electronic authentication is impossible due to running out of the battery of the electronic key 100 or loss of the electronic key, but also in a case where electronic authentication cannot be made due to running out of the on-vehicle battery and in a case where power to energize the solenoid cannot be obtained.

In the present embodiment, setting is made so that when a rider in possession of the electronic key presses the IG knob 51 as an initial operation to turn the IG knob, electronic authentication is performed by wireless communication between the electronic key and the vehicle-side control unit, and the IG knob lock mechanism 102 is unlocked. The electronic authentication between the electronic key and the vehicle-side control unit may be performed as the electronic key and the vehicle-side control unit approach each other within a communication range as a trigger regardless of an operation by the rider.

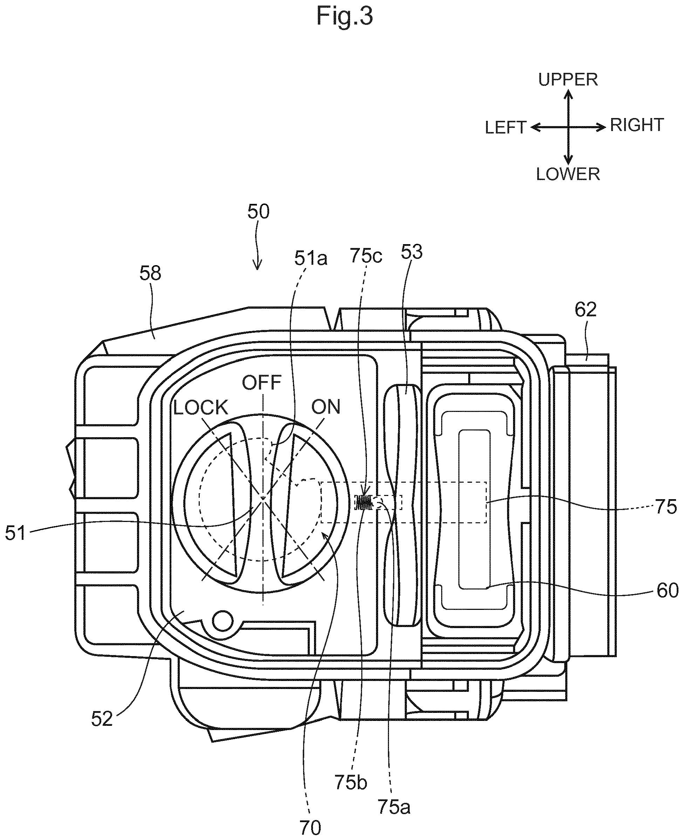

Fig. 3 is a front view of the smart lock module 50. As described above, the IG knob 51 of the smart lock module 50 switches among three positions of the ON/OFF/LOCK positions. Among these, when the IG knob is moved from the LOCK position or the OFF position to another turning position (LOCK → OFF, OFF → ON, OFF → LOCK), electronic authentication with the electronic key is required.

In the present embodiment, in the case where the IG knob 51 is at the LOCK position or the OFF position, in conjunction with this, the lid open knob 60 is configured to be restricted from swinging. Therefore, in the case where electronic authentication with the electronic key cannot be performed, the IG knob 51 cannot turn and the lid open knob 60 cannot swing.

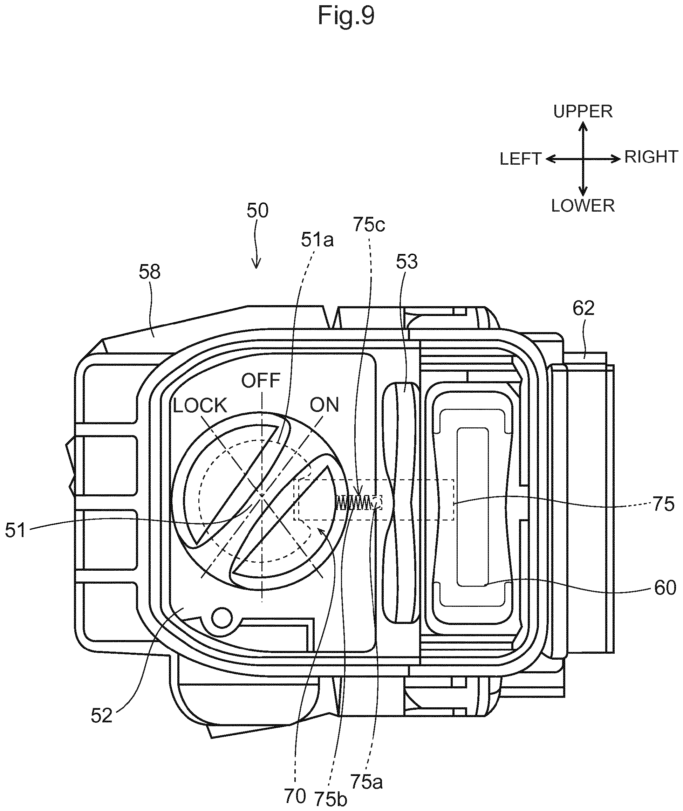

The lid open knob lock mechanism 70 that restricts swinging of the lid open knob 60 includes a lock bar 75 slidable in the left-right direction in the drawing in accordance with a cam mountain 51a formed on the IG switch unit 54 that rotates along with turning of the IG knob 51. The lock bar 75 is always biased in a direction (leftward direction in the drawing) to unlock the lid open knob 60 by a biasing member 75b such as a spring, and the biasing member 75b is housed between a positioning pin 75a fixed to the main body case 52 side and a wall of the housing portion 75c formed on the lock bar 75. With this configuration, when the IG knob 51 is turned to the LOCK position or the OFF position (to the OFF position in Fig. 3), the lock bar 75 climbs over the cam mountain 51a and slides rightward in the drawing, and is engaged in an engagement hole of the lid open knob 60 to prohibit swinging of the lid open knob 60. On the other hand, as shown in Fig. 9, when the IG knob 51 is turned to the ON position, according to a biasing force of the biasing member 75b, the lock bar 75 moves to the UNLOCK position (leftward in the drawing).

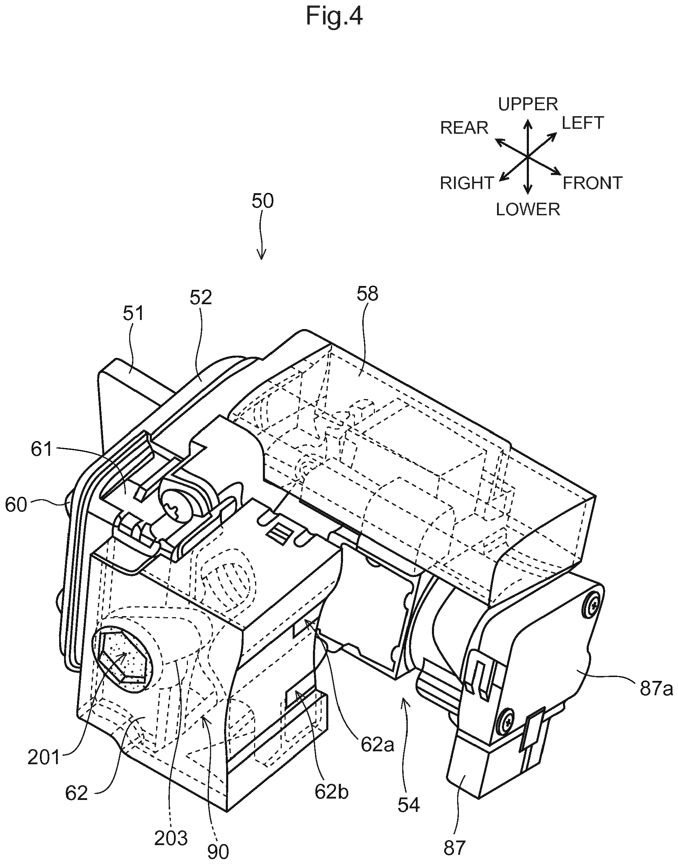

Fig. 4 is a rear side perspective view of the smart lock module 50. To the end portion on the vehicle body front side of the IG switch unit 54, a direct coupler 87 that makes electrical connection to the vehicle body side is attached via an attaching portion 87a. As described above, on the second case 61, the lid open mechanism 90 is supported, and the second protective cover 62 is attached so as to cover the lid open mechanism 90. In a surface of the second protective cover 62, through holes 62a and 62b through which the cables 27 and 28 are inserted are formed.

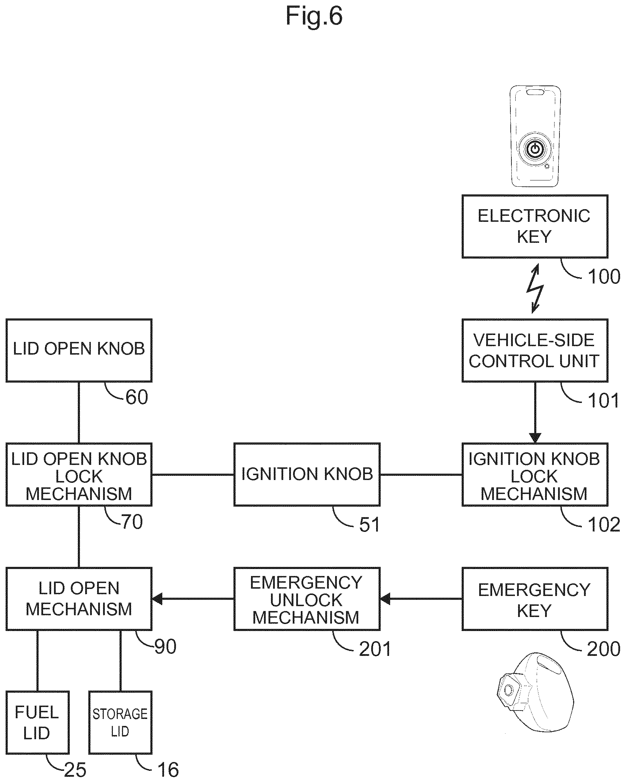

On a side surface on the vehicle body right side of the second protective cover 62, a key cylinder 201 as an emergency unlock mechanism is provided. The key cylinder 201 is configured so as to be turned with an emergency key 200 (refer to Fig. 6) separated and independent from the electronic key to be used for electronic authentication.

The key cylinder 201 is provided with an operation arm 203, and is configured so that by turning the key cylinder 201 with the emergency key 200, the lid open mechanism 90 can be directly actuated and the storage lid 16 can be opened. Operation of the emergency unlocking device is described in detail later.

Accordingly, in the emergency unlocking device according to the present embodiment, even in a case where electronic authentication with the electronic key is impossible, by turning the key cylinder 201 with the emergency key 200, the lid open mechanism 90 can be directly actuated and the storage lid 16 can be opened. At this time, for example, by providing the storage box 26 below the storage lid 16 with a button or the like that releases the lock of the IG knob lock mechanism 102, the IG knob 51 can be turned to the ON position without electronic authentication with the electronic key. The lid to be opened by an operation of the key cylinder 201 may be the fuel lid 25.

The operation surface of the key cylinder 201 is disposed orthogonal to the operation surface of the IG knob 51. Accordingly, when the smart lock module 50 is attached to the vehicle body, the key cylinder 201 is positioned on the vehicle body front side of the cover panel 15 (refer to Fig. 1) and is not visible from the outside. The key cylinder 201 can be set so as to be accessed from, for example, the inside of a small article case provided on the cover panel 15.

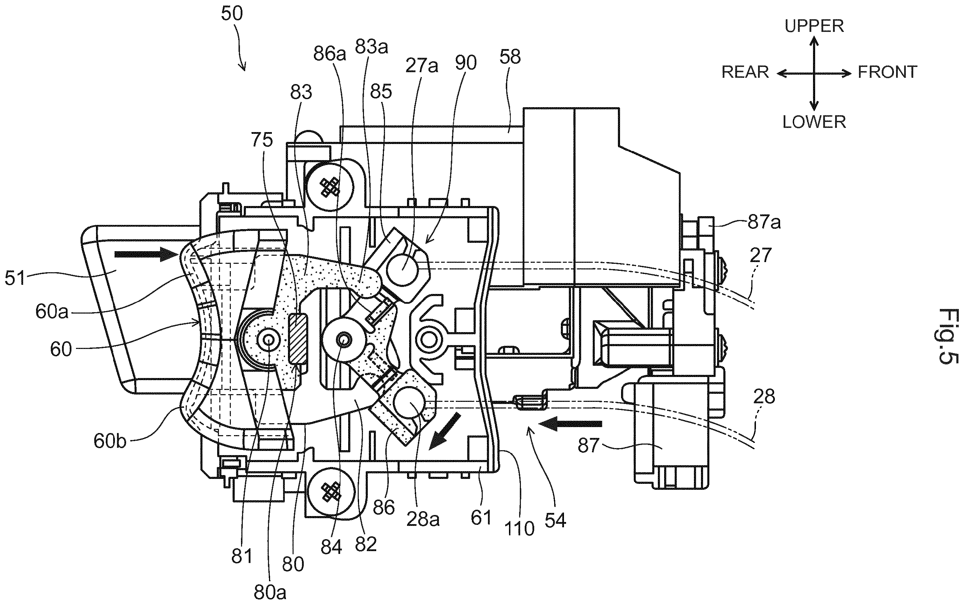

Fig. 5 is a right side view of the smart lock module 50. This figure shows a state where the second protective cover 62 that protects the lid open mechanism 90 is removed. The lid open knob 60 is supported by a swing shaft 81 swingably with respect to the second case 61. The lid open mechanism 90 is supported swingably by a swing shaft 84.

The lid open mechanism 90 includes a first swing body 85 to unlock the storage lid 16, and a second swing body 86 to unlock the fuel lid 25. The first swing body 85 and the second swing body 86 are swingable independently of each other, and to the first swing body 85, a cable end 27a of the cable 27 is attached, and to the second swing body 86, a cable end 28a of the cable 28 is attached, respectively.

To the back side of the lid open knob 60, a tabular pressing member 80 consisting of a first pressing arm 82 to swing and rotate the first swing body 85 and a second pressing arm 83 to swing and rotate the second swing body 86 is fixed. In the present embodiment, as shown by the thick arrows in the drawing, when the upper portion 60a of the lid open knob 60 is pressed, a pressing portion 83a of the second pressing arm 83 presses a receiving portion 86a of the second swing body 86, and accordingly, the second swing body 86 swings and rotates clockwise in the drawing and pulls the cable 28, and the fuel lid 25 is unlocked. In Fig. 5, for description of the operation, only the second pressing arm 83 and the second swing body 86 are shown with dot hatching. On the other hand, when the lower side 60b of the lid open knob 60 is pressed, the pressing portion of the first pressing arm 82 makes the first swing body 85 swing and rotate counterclockwise to pull the cable 27, and the storage lid 16 is unlocked. Then, when the pressing operation of the lid open knob 60 is stopped, due to a biasing force of a return spring provided on the catch mechanism of each lid, each of the lid open mechanism 90 and the lid open knob 60 returns to the NEUTRAL position.

In the pressing member 80 of the lid open knob 60, a through hole 80a having a quadrate shape is formed at a position near a rotary shaft 81. By engaging the lock bar 75 that interlocks with the IG knob 51 in this through hole 80a, the lid open knob 60 is prohibited from swinging.

At an end portion of the second case 61, outlets for the cables 27 and 28 are formed, and a positioning plate 110 that defines the routing positions of the cables 27 and 28 is provided. Accordingly, when the second protective cover 62 is attached from the state shown in Fig. 5, the portion other than the outlets for the cables 27 and 28 is covered, and entrance of moisture into the lid open mechanism 90, etc., are prevented.

The emergency unlocking device according to the present invention is configured so that by turning the key cylinder 201, the first swing body 85 included in the lid open mechanism 90 is directly swung to pull the cable 27, and accordingly, the storage lid 16 can be opened.

Fig. 6 is a functional block diagram showing the entire configuration of the emergency unlocking device according to the present invention. As described above, the IG knob 51 is provided with the IG knob lock mechanism 102 using a solenoid, and unless electronic authentication with the vehicle-side control unit 101 by using the electronic key 100 is completed, the IG knob 51 is not permitted to turn. Further, in the present embodiment, the IG knob 51 and the lid open knob lock mechanism 70 interlock with each other, and the lid open knob lock mechanism 70 is unlocked only when the IG knob 51 is ON, and therefore, the lid open knob 60 cannot be operated in a state where electronic authentication is impossible due to running out of the battery of the electronic key 100, loss of the electronic key, running out of the on-vehicle battery, or the like.

On the other hand, the emergency unlocking device according to the present invention is configured so that, by operating the key cylinder 201 as an emergency unlock mechanism with the emergency key 200 separated and independent from the electronic key 100, while the IG knob 51 and the lid open knob lock mechanism 70 are left locked, the lid open mechanism 90 can be directly actuated to enable a swinging operation of the lid open knob 60.

Although various structures can be applied to the emergency key 200, in the present embodiment, a magnet key that releases the lock of a lock mechanism by repulsion of the magnet is used to reduce, in particular, the dimension in the thickness direction of the key cylinder 201.

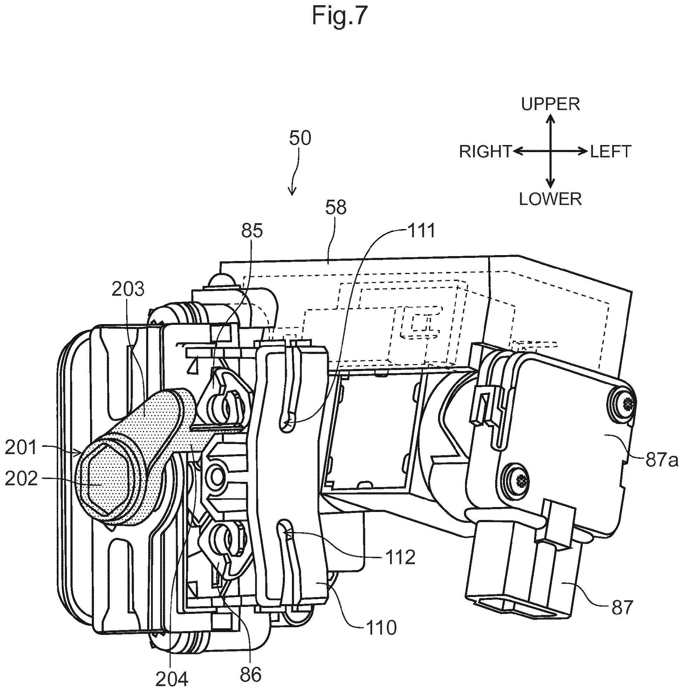

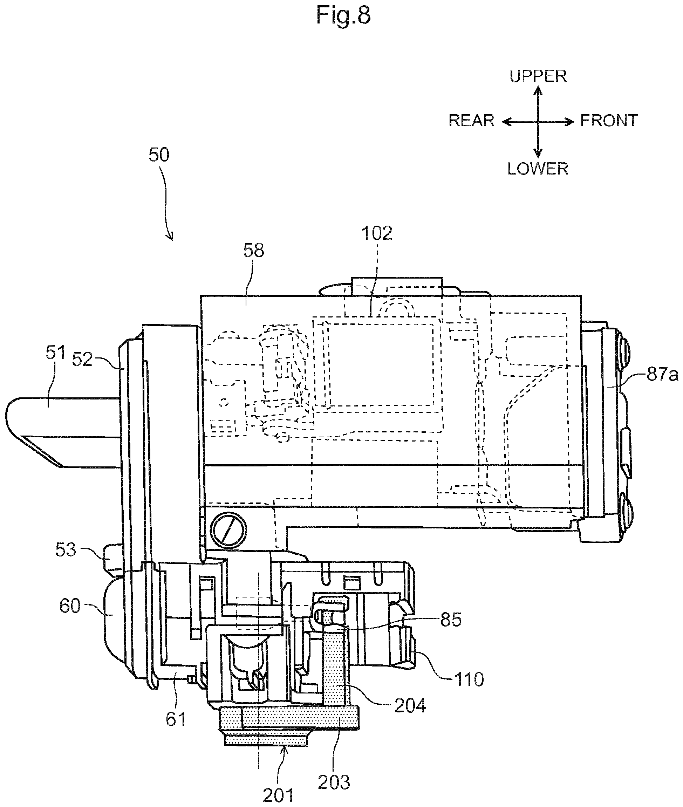

Fig. 7 is a perspective view showing the key cylinder 201 as an emergency unlock mechanism and its peripheral structure. Fig. 8 is a top view of the smart lock module 50. In Fig. 7 and Fig. 8, a state where the second protective cover 62 is removed is shown. In the positioning plate 110, outlets 111 and 112 that define the routing positions of the cables 27 and 28 are formed.

The key cylinder 201 has an operation arm 203 extending outward in a radial direction, and an engagement plate 204 extending in a rotation axis direction from the operation arm 203 engages with the first swing body 85. In the present embodiment, when the key cylinder 201 is turned counterclockwise by using the emergency key 200 at a magnet key engagement portion 202, the engagement plate 204 swings the first swing body 85 counterclockwise, and accordingly, the cable 27 is pulled. The turning shaft of the key cylinder 201 is disposed coaxial with the swing shaft 84 of the lid open mechanism 90 directed in the vehicle width direction. Accordingly, a structure to swing the first swing body 85 can be obtained with a simple configuration.

According to the configuration described above, in the emergency unlocking device according to the present invention, a compact smart module unit 50 in which, in the configuration in which the lid open knob 60 is unlocked in conjunction with a turning operation of the IG knob 51 to the ON position, even in a case where the IG knob 51 cannot be turned since electronic authentication with the electronic key is impossible, the lid open mechanism 90 can be swung by using the emergency key 200, and the emergency unlock mechanism 201 and the ignition switch unit 54 are integrated, can be obtained.

The form of the smart module unit, the shapes and structures of the ignition switch unit, the lid open mechanism, and the lids, and the shape and the structure of the emergency key, etc., are not limited to those of the embodiment described above, and can be variously modified. The emergency unlocking device for a motorcycle according to the present invention is applicable not only to a motorcycle but also to a saddle type three-wheeler.

### Reference Signs List

- 16: Storage lid (seat),
- 25: Fuel lid,
- 27, 28: Cable,
- 50: Smart module unit,
- 51: Ignition knob,
- 55: Handle lock portion,
- 56: Lock pin,
- 60: Lid open knob,
- 70: Lid open knob lock mechanism,
- 90: Lid open mechanism,
- 100: Electronic key,
- 101: Vehicle-side control unit,
- 102: Ignition knob lock mechanism,
- 200: Emergency key,
- 201: Key cylinder (emergency unlock mechanism),
- 203: Operation arm,
- 204: Engagement plate

## Claims

1. An emergency unlocking device for a motorcycle comprising: a smart module unit (50) including an operation knob (51) of an ignition switch unit (54) that turns ON/OFF a power supply of a motorcycle, a lid open mechanism (90) to open lids (16, 25) provided in the vehicle, and a lid open knob lock mechanism (70) to lock operation of the lid open knob (60) that actuates the lid open mechanism (90) according to a position of the operation knob (51), and configured so that a turning operation of the operation knob (51) is permitted according to electronic authentication between a vehicle-side control unit (101) and an electronic key (100), wherein
an emergency unlock mechanism (201) that can directly operate the lid open mechanism (90) by using an emergency key (200) separated and independent from the electronic key (100) in a state where operation of the lid open knob (60) is locked is provided,_wherein
the emergency unlock mechanism (201) is a key cylinder that is turned by magnet key (200) at a magnet key engagement portion (202),, and transmits the turning operation to other components, wherein
the emergency unlock mechanism (201) pulls cables (27, 28) to open the lids (16, 25) by turning the lid open mechanism (90) along with the turning operation of the emergency unlock mechanism, wherein
the key cylinder (201) is provided with an operation arm (203) extending outward in a radial direction and an engagement plate (204) extending in a rotation axis direction from the operating arm, the engagement plate (204) being adapted to engage with a first swing body (85), wherein, when turning the key cylinder (201), the engagement plate (204) is adapted to swing the first swing body (85) such that a cable (27) is pulled, wherein a turning shaft of key cylinder (201) is disposed coaxially with a swing shaft (84) of the lid open mechanism (90) directed in the vehicle width direction, the smart module unit (50) in which, in a configuration further being adapted such that the lid open knob (60) is unlocked in conjunction with a turning operation of operation knob (51) to an ON position, the lid open mechanism (90) can be swung by using emergency key (200), including in a case where the operation knob (51) cannot be turned since electronic authentication with the electronic key is impossible.

2. The emergency unlocking device for a motorcycle according to Claim 1, wherein the operation knob (51), the lid open knob (60), and the emergency unlock mechanism (201) are disposed side by side.

3. The emergency unlocking device for a motorcycle according to claims 1 or 2 wherein an operation surface of the lid open knob (60) and an operation surface of the emergency unlock mechanism (201) are disposed orthogonal to each other.

## Patentansprüche

1. Notentriegelungsvorrichtung für ein Motorrad das umfasst: eine intelligente bzw. Smart-Moduleinheit (50) mit einem Betätigungsknopf (51) einer Zündschaltereinheit (54), der eine Stromversorgung eines Motorrads EIN/AUS schaltet,
einen Deckelöffnungsmechanismus (90) zum Öffnen von im Fahrzeug vorgesehenen Deckeln (16, 25), und einen Deckelöffnungsknopfverriegelungsmechanismus (70) zum Verriegeln der Betätigung des Deckelöffnungsknopfes (60), der den Deckelöffnungsmechanismus (90) gemäß einer Position des Betätigungsknopfs (51) betätigt, und dazu eingerichtet ist, dass eine Drehbetätigung des Betätigungsknopfes (51) gemäß einer elektronischen Authentifizierung zwischen einer fahrzeugseitigen Steuereinheit (101) und einem elektronischen Schlüssel (100) zulässig ist, wobei
ein Notentriegelungsmechanismus (201), der den Deckelöffnungsmechanismus (90) unter Verwendung eines vom elektronischen Schlüssel (100) getrennten und unabhängigen Notschlüssels (200) in einem Zustand, in dem die Betätigung des Deckelöffnungsknopfes (60) verriegelt ist, direkt betätigen kann, vorgesehen ist, wobei der Notentriegelungsmechanismus (201) ein Schlüsselzylinder ist, der durch einen Magnetschlüssel (200) an einem Magnetschlüsseleingriffsabschnitt (202) gedreht wird und die Drehbetätigung auf andere Komponenten überträgt, wobei der Notentriegelungsmechanismus (201) Kabel (27, 28) zum Öffnen der Deckel (16, 25) zieht, indem er den Deckelöffnungsmechanismus (90) zusammen mit der Drehbetätigung des Notentriegelungsmechanismus dreht, wobei
der Schlüsselzylinder (201) mit einem Betätigungsarm (203), der sich in radialerRichtung nach außen erstreckt, und einer Eingriffsplatte (204) versehen ist, die sich in einer Drehachsenrichtung vom Betätigungsarm aus erstreckt, wobei die Eingriffsplatte (204) derart ausgebildet ist, dass sie in einen ersten Schwenk- bzw. Schwingkörper (85) eingreift, wobei beim Drehen des Schlüsselzylinders (201) die Eingriffsplatte (204) derart eingerichtet ist, dass sie den ersten Schwenkkörper (85) derart schwenkt, dass ein Kabel (27) gezogen wird, wobei eine Drehwelle des Schlüsselzylinders (201) koaxial zu einer in Fahrzeugbreitenrichtung gerichteten Schwenkwelle (84) des Deckelöffnungsmechanismus (90) angeordnet ist, wobei die intelligente Moduleinheit (50) in einer weiteren Konfiguration derart angepasst ist, dass der Deckelöffnungsknopf (60) in Verbindung mit einer Drehbetätigung des Betätigungsknopfes (51) in eine EIN-Stellung entriegelt wird, der Deckelöffnungsmechanismus (90) unter Verwendung des Notschlüssels (200) schwenkbar ist, auch in einem Fall, in dem der Betätigungsknopf (51) nicht gedreht werden kann, da eine elektronische Authentifizierung mit dem elektronischen Schlüssel nicht möglich ist.

2. Notentriegelungsvorrichtung für ein Motorrad nach Anspruch 1, wobei der Betätigungsknopf (51), der Deckelöffnungsknopf (60) und der Notentriegelungsmechanismus (201) nebeneinander angeordnet sind.

3. Notentriegelungsvorrichtung für ein Motorrad nach Anspruch 1 oder 2, wobei eine Betätigungsfläche des Deckelöffnungsknopfes (60) und eine Betätigungsfläche des Notentriegelungsmechanismus (201) orthogonal zueinander angeordnet sind.

## Revendications

1. Dispositif de déverrouillage d'urgence pour une motocyclette comportant : une unité modulaire intelligente (50) incluant un bouton d'actionnement (51) d'une unité de commutateur d'allumage (54) qui met en marche/arrête une alimentation en courant d'une motocyclette,
un mécanisme d'ouverture de capots (80) pour ouvrir des capots (16, 25) agencés dans le véhicule, et un mécanisme de blocage de bouton d'ouverture de capots (70) pour bloquer l'actionnement du bouton d'ouverture de capots (60) qui actionne le mécanisme d'ouverture de capots (90) en fonction une position du bouton d'actionnement (51), et configuré de sorte qu'une opération de rotation du bouton d'actionnement (51) est permise en fonction d'une authentification électronique entre une unité de commande côté véhicule (101) et une clé électronique (100),
dans lequel est prévu un mécanisme de déverrouillage d'urgence (201) qui peut directement actionner le mécanisme d'ouverture de capots (90) en utilisant une clé d'urgence (200) séparée et indépendante de la clé électronique (100) dans un état où l'actionnement du bouton d'ouverture de capots (60) est bloqué,
dans lequel le mécanisme de déverrouillage d'urgence (201) est un barillet de serrure qui est tourné par une clé à aimant (200) sur une partie d'engagement de clé à aimant (202), et transmet l'opération de rotation à d'autres composants,
dans lequel le mécanisme de déverrouillage d'urgence (201) tire des câbles (27, 28) pour ouvrir les capots (16, 25) en tournant le mécanisme d'ouverture de capots (90) de même que l'opération de rotation du mécanisme de déverrouillage d'urgence,
dans lequel le barillet de serrure (201) est pourvu d'un bras d'actionnement (203) s'étendant vers l'extérieur dans une direction radiale et une plaque d'engagement (204) s'étendant dans une direction d'axe de rotation à partir du bras d'actionnement, la plaque d'engagement (204) étant adaptée pour s'engager avec un premier corps de basculement (85), dans lequel, lors de la rotation du barillet de serrure (201), la plaque d'engagement (204) est adaptée pour faire basculer le premier corps de basculement (85) de telle sorte qu'un câble (27) est tiré, dans lequel un axe de rotation du barillet de serrure (201) est disposé coaxialement à un axe de basculement (84) du mécanisme d'ouverture de capots (90) dirigé dans la direction de largeur du véhicule, l'unité modulaire intelligente (50) étant telle que, dans une configuration étant en outre adaptée de telle sorte que le bouton d'ouverture de capots (60) est débloqué conjointement à une opération de rotation du bouton d'actionnement (51) jusqu'à une position de marche, le mécanisme d'ouverture de capots (90) peut basculer en utilisant la clé d'urgence (200), y compris dans un cas où le bouton d'actionnement (51) ne peut pas être tourné car l'authentification électronique avec la clé électronique est impossible.

2. Dispositif de déverrouillage d'urgence pour une motocyclette selon la revendication 1, dans lequel le bouton d'actionnement (51), le bouton d'ouverture de capots (60) et le mécanisme de déverrouillage d'urgence (201) sont disposés côte à côte.

3. Dispositif de déverrouillage d'urgence pour une motocyclette selon les revendications 1 ou 2, dans lequel une surface d'actionnement du bouton d'ouverture de capots (60) et une surface d'actionnement du mécanisme de déverrouillage d'urgence (201) sont disposées orthogonales l'une à l'autre.
